# FASCICULE DE BREVET EUROPEEN

(11) **EP 4 522 471 B1**
(45) Date de publication et mention de la délivrance du brevet: **21.01.2026**
(21) Numéro de dépôt: 23720167.8
(22) Date de dépôt: 31.03.2023
(51) Int. Cl.: B60W 30/14

(54) **PROCÉDÉ ET DISPOSITIF DE RÉGULATION DE VITESSE D'UN VÉHICULE**
VERFAHREN UND VORRICHTUNG ZUR GESCHWINDIGKEITSREGELUNG EINES FAHRZEUGS
METHOD AND DEVICE FOR CONTROLLING THE SPEED OF A VEHICLE

(30) Priorité: 13.05.2022 FR 2204564
(43) Date de publication de la demande: 19.03.2025
(73) Titulaire: Stellantis Auto SAS, 78300 Poissy (FR)
(72) Inventeur: DUSI, Jacques, 77220 GRETZ ARMAINVILLIERS (FR); MAFRICA, Stefano, 92100 BOULOGNE BILLANCOURT (FR)
(74) Mandataire: ESIP
(86) Numéro de dépôt international: PCT/FR2023/050469
(87) Numéro de publication internationale: WO 2023/218144

(56) Documents cités:
- EP-A1- 3 296 173
- WO-A1-2017/008999
- DE-A1- 102014 017 522

## Description

### Domaine technique

La présente invention concerne les procédés et dispositifs de régulation de vitesse de véhicule, notamment un véhicule autonome.

### Arrière-plan technologique

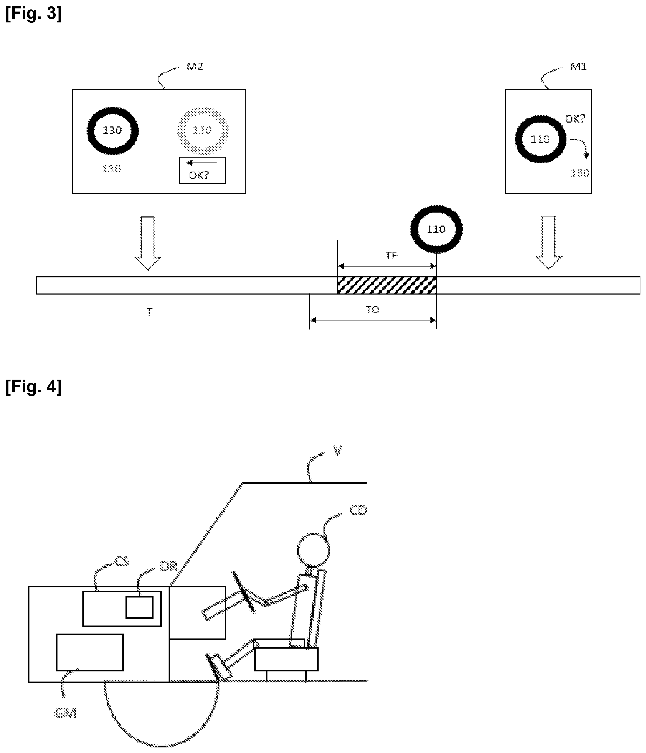

Certains régulateurs de vitesse de véhicule, offrent une fonction appelée ISA, de l'anglais Intelligent Speed Adaptation, en français adaptation de vitesse intelligente, qui est destinée à informer le conducteur dès qu'une nouvelle vitesse limite, différente de la vitesse de consigne courante utilisée pour réguler la vitesse du véhicule, a été détectée. La fonction ISA produit une proposition d'une nouvelle vitesse de consigne adaptée à cette nouvelle vitesse limite. Typiquement, la nouvelle vitesse de consigne est égale à la nouvelle vitesse limite. Cette nouvelle vitesse limite est obtenue soit grâce à la lecture au passage d'un panneau indicateur de la nouvelle vitesse limite par une caméra installée dans une partie avant du véhicule, soit dans une base de données cartographique stockée dans le véhicule, soit encore lors d'une transmission à travers un canal de communication. Le régulateur de vitesse commande l'affichage de cette proposition de changement de vitesse de consigne selon un premier mode d'affichage M1 sur une IHM (Interface Homme Machine) tel qu'un écran du véhicule V par exemple. Tel que illustré sur la figure 3, ce premier mode d'affichage peut comprendre une zone d'affichage qui affiche des informations présentant la nouvelle vitesse limite (110 km/h), la vitesse de consigne courante du véhicule V, en l'occurrence 130 km/h et une zone d'interfaçage proposant au conducteur du véhicule V de valider une nouvelle vitesse de consigne égale à la nouvelle vitesse limite en l'occurrence 110 km/h.

Le régulateur de vitesse déclenche soit immédiatement l'application d'une accélération ou d'une décélération destinée à contraindre le véhicule à rouler à la vitesse définie par la nouvelle vitesse de consigne, soit ce déclenchement se produit si le conducteur valide (accepte) cette proposition de nouvelle vitesse de consigne en appuyant, par exemple, sur un organe de commande dédié.

La nouvelle vitesse limite étant détectée au passage du panneau indicateur, et le conducteur mettant généralement un certain temps pour réagir avant d'accepter la nouvelle vitesse de consigne proposée, le véhicule se trouve généralement en excès de vitesse après le panneau sur une distance qui dépend de sa vitesse au moment de la validation.

La zone dans laquelle le véhicule est en excès de vitesse (ou survitesse) peut s'avérer problématique lorsque le véhicule est également équipé d'un dispositif chargé de contrôler automatiquement sa direction (véhicule automatisé). En effet, sur autoroute un changement de limitation de vitesse est très souvent lié à des variations de rayon de courbure des virages, et donc si le véhicule roule à une vitesse supérieure à la vitesse limite son dispositif de contrôle peut être incapable de lui faire prendre un virage.

Pour tenter de remédier à cet inconvénient, il a été proposé de produire plus tôt la proposition de nouvelle vitesse de consigne, afin de laisser le temps au véhicule de décélérer ou d'accélérer avant le panneau indicateur. On parle de fonction AISA, de l'anglais Anticipated Intelligent Speed Adaptation, en français adaptation de vitesse intelligente et anticipée. La fonction AISA implique que le véhicule dispose suffisamment à l'avance des informations relatives aux limitations de vitesse sur la voie de circulation qu'il emprunte.

La fonction AISA peut n'être autorisée que sur des routes ayant des caractéristiques particulières. Ces routes sont dites « éligibles ». Par simplification, et par exemple, on considère par la suite qu'une route éligible est une autoroute où la vitesse est limitée à 130 km/h.

L'utilisation de fonction AISA est certes plus sûre, mais elle peut occasionner une gêne pour les autres conducteurs puisque dès que le conducteur a validé la nouvelle vitesse de consigne son véhicule peut décélérer jusqu'à la vitesse définie par cette nouvelle vitesse de consigne, puis circule par anticipation à cette nouvelle vitesse, qui est inférieure à la vitesse limite en cours, jusqu'au prochain panneau indicateur, sans que les autres conducteurs ne puissent en comprendre la raison. Ainsi, en fonction des vitesses considérées et de la configuration du terrain, la durée pendant laquelle le véhicule circule à la nouvelle vitesse peut être comprise entre environ quinze secondes et environ trente secondes.

La demande de brevet français FR3 034 066 propose un dispositif de régulation de vitesse d'un véhicule qui limite autant que possible la gêne occasionnée par un changement de vitesse de consigne d'un véhicule. Ce dispositif de régulation de vitesse comprend des moyens de traitement agencés, en réponse à une validation par un conducteur du véhicule d'une nouvelle vitesse limite devant être respectée à partir d'une position connue et inférieure à une vitesse de consigne courante, pour déclencher l'instauration d'un profil de décélération choisi, propre à faire décroître la vitesse de consigne courante jusqu'à une nouvelle vitesse de consigne au plus égale à la nouvelle vitesse limite sensiblement à la position connue, entre une première position, comprise entre une position primaire du véhicule à un instant où le conducteur effectue la validation précitée et une seconde position à laquelle on peut au plus tard déclencher l'instauration d'un profil de décélération maximal, et cette seconde position. Un profil de décélération maximal est un profil dont la décroissance de la vitesse du véhicule est maximale, c'est-à-dire suffisamment forte pour que la durée soit minimale pour que la vitesse du véhicule passe de la vitesse de consigne courante à la nouvelle vitesse de consigne, et que cette décélération ne provoque pas un trop fort désagrément pour les passagers. Typiquement, le profil de décélération maximal est choisi pour éviter tout freinage d'urgence qui serait inconfortable pour les passagers à bord du véhicule et dangereux pour les véhicules circulant derrière le véhicule V.

Ainsi, on est assuré que le véhicule roule à une vitesse respectant la nouvelle limitation de vitesse à l'endroit où est situé le panneau indicateur, c'est-à-dire à la position du panneau indicateur.

La figure 1 illustre un exemple de fonctionnement du dispositif de régulation de la demande de brevet français FR3 034 066 qui met en œuvre une fonction AISA.

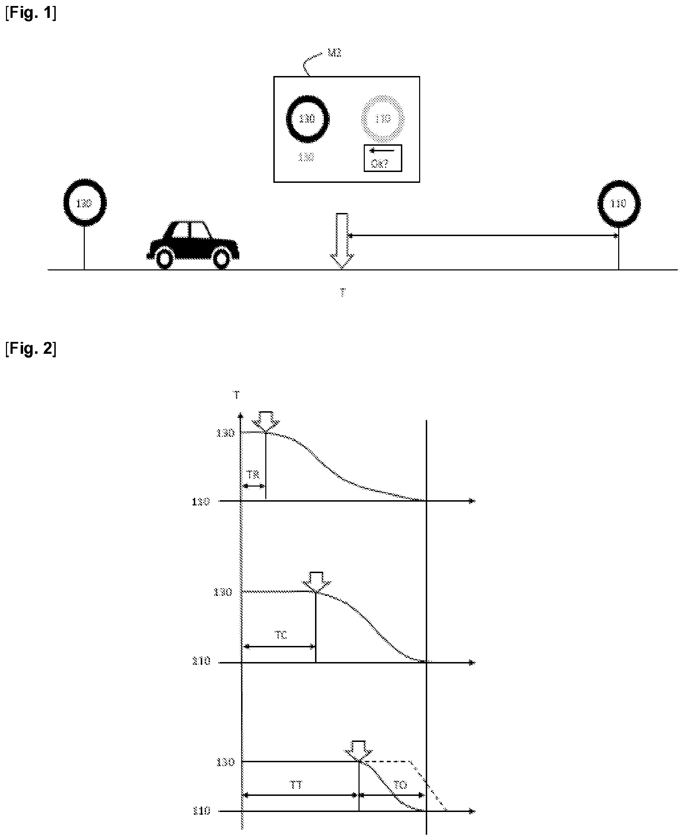

Selon l'exemple de la figure 1, un véhicule V circule à 130 km/h sur une autoroute éligible et est en approche d'une section de cette autoroute où la circulation est limitée à 110 km/h.

Selon la fonction AISA mise en œuvre par la demande de brevet français suscitée, une proposition d'une nouvelle vitesse de consigne adaptée à une nouvelle vitesse limite est affichée selon un deuxième mode d'affichage M2 sur une IHM (Interface Homme Machine) tel qu'un écran du véhicule V par exemple. Tel que illustré sur la figure 1, ce deuxième mode d'affichage M2 peut comprendre une zone d'affichage qui affiche des informations présentant la vitesse limite de la section actuellement empruntée par le véhicule V (130 km/h), la vitesse de consigne courante du véhicule V, en l'occurrence 130 km/h, la nouvelle vitesse limite, en l'occurrence 110 km/h et une zone d'interfaçage proposant au conducteur du véhicule V de valider une nouvelle vitesse de consigne égale à la nouvelle vitesse limite en l'occurrence 110 km/h. Cette proposition est affichée à un instant temporel T, marqué sur la figure 1 par une flèche verticale. Le dispositif de régulation choisit à cet instant temporel T un profil de décélération pour que le véhicule roule à la nouvelle vitesse de consigne lorsqu'il se trouvera au niveau du panneau indicateur de la nouvelle vitesse limite. La durée séparant l'instant temporel T et le nouveau panneau indicateur dépend de la vitesse réelle du véhicule V et de la distance entre le véhicule et ce panneau indicateur.

La figure 2 illustre trois profils de décélération qui peuvent être choisis selon le délais mis par le conducteur du véhicule V pour valider une proposition de changement de vitesse de consigne à partir de l'instant temporel T.

Si le conducteur valide la proposition dans un délais TR raisonnable, c'est-à-dire, par rapport au nouveau panneau de vitesse, à un instant temporel compris entre T et T-TR sur la figure 1, le véhicule V atteint le nouveau panneau indicateur avec une vitesse égale à la nouvelle vitesse de consigne (110 km/h) et avec un maximum de confort (décélération faible).

Si le conducteur valide la proposition dans un délais TC plus long, c'est-à-dire supérieur au délais TR mais inférieur à un délai maximal TT (TR<TC<TT), la pente du profil de décélération choisi est plus abrupte pour que le véhicule V atteigne le nouveau panneau indicateur avec une vitesse égale à la nouvelle vitesse de consigne (110 km/h). La décélération est alors plus forte mais reste confortable
Si le conducteur valide la proposition après une durée TO au-delà de laquelle il ne sera plus possible de décélérer le véhicule V pour qu'il atteigne une vitesse égale à la nouvelle vitesse de consigne au pied du nouveau panneau indicateur, la décélération est maximale et le véhicule V aura une vitesse minimale qu'il est possible d'atteindre au moment du passage du nouveau panneau indicateur. Il finira par atteindre la nouvelle vitesse de consigne mais après que le véhicule sera passé devant le panneau indicateur. La durée minimale TO est généralement fixée à quelques secondes et est fonction de la différence entre la vitesse courante du véhicule V et la nouvelle vitesse limite.

La fonction AISA telle qu'elle est mise en œuvre actuellement produit une proposition de changement de vitesse de consigne à un instant temporel T unique. Or, il existe des situations où à cet instant temporel T, un évènement peut se produire qui empêche la production d'une proposition de changement de vitesse de consigne par la fonction AISA.

La liste suivante non exhaustive d'évènements pouvant se produire simultanément ou séparément est donnée à titre d'exemple de situations où une proposition n'est pas produite par la fonction AISA.
- la route n'est pas éligible à l'instant temporel T;
- pour un panneau précédent, une proposition produite par la fonction AISA ou ISA est toujours en cours;
- le conducteur vient de changer de vitesse de consigne juste avant l'instant temporel T;
- un changement de voie automatique (SALC : Semi Automatic Lane Change en Anglais) est engagé ou demandé autour de l'instant temporel T.

Ces situations peuvent se produire assez fréquemment et limitent fortement la production de proposition de changement de vitesse de consigne par la fonction AISA.

Il est donc nécessaire de modifier la mise en œuvre des fonctions AISA pour augmenter la production de proposition de changement de vitesse de consigne.

La production successive de propositions de changement de vitesse de consigne implique des affichages successifs de ces propositions. Il est nécessaire que deux affichages successifs soient séparés d'une durée minimale pour que le conducteur ait le temps de voir la première de ces propositions, de la lire et d'agir en conséquence avant que la seconde proposition ne soit affichée en remplacement de la première. Une zone parfois appelée zone de flashage est définie pour introduire un intervalle de temps TF entre deux affichages successifs de propositions de changement de vitesse de consigne. Cette zone est illustrée sur la figure 3 par la zone hachurée.

Selon l'exemple de la figure 3, la fonction AISA est active jusqu'au pied du nouveau panneau indicateur de la nouvelle vitesse limite (110 km/h). La fonction ISA est ensuite activée. La zone de flashage, typiquement inférieure à la durée minimale TO, permet d'assurer que deux propositions (l'une produite par la fonction AISA et l'autre par la fonction ISA) ne soient pas produites et affichées trop proches l'une de l'autre. Selon l'exemple, une première proposition est produite par la fonction AISA à l'instant temporel T en dehors de l'intervalle de temps TF. Cette première proposition est affichée selon le deuxième mode d'affichage M2. Si cette première proposition n'est pas validée par le conducteur CD, une deuxième proposition est produite par la fonction ISA une fois que le véhicule a franchi le panneau indicateur de la nouvelle vitesse limite (110 km/h). Cette deuxième proposition est affichée selon le premier mode d'affichage M1. La zone de flashage est une zone dans laquelle la première proposition n'est pas affichée si l'instant temporel T est à l'intérieur de l'intervalle de temps TF car le conducteur CD n'a alors pas le temps de lire les informations et de valider la première proposition (M2) que cette première proposition serait effacée au passage du panneau indicateur et que la deuxième proposition (M1) serait affichée (M1).

On connait également par le document WO2017/008999, un Système d'aide à la conduite à guidage longitudinal dans un véhicule automobile.

Le problème est de multiplier la production de propositions de changement de vitesse de consigne tout en respectant la zone de flashage.

### Résumé de la présente invention

Un objet de la présente invention est de résoudre au moins l'un des problèmes de l'arrière-plan technologique décrit précédemment.

Un autre objet de la présente invention est de modifier la mise en œuvre de la fonction AISA en permettant la production d'une proposition de changement de vitesse de consigne à un instant temporel T avant le passage d'un panneau indicateur de vitesse limite dès qu'un ensemble de conditions relatives à la dynamique du véhicule et/ou à l'environnement du véhicule est vérifié, c'est-à-dire dès que la proposition de changement de vitesse de consigne n'est plus empêchée d'être produite à cause d'une situation où une telle proposition ne peut pas être produite par la fonction AISA. La proposition produite est alors affichée selon un deuxième mode d'affichage si l'instant temporel T est à l'extérieur de l'intervalle de temps TF et selon un premier mode d'affichage si cet instant temporel T est à l'intérieur de l'intervalle de temps TF.

La présente invention permet donc de surveiller à quel instant temporel il est possible de produire, par une fonction AISA, une proposition de changement de vitesse de consigne en amont d'un panneau indicateur d'une vitesse de consigne, a contrario de la mise en œuvre actuelle de la fonction AISA qui ne permet de produire qu'une proposition à un instant temporel fixe (unique), c'est-à-dire indépendamment du fait que cette proposition puisse ou non être produite à cet instant temporel par la fonction AISA. De plus, selon la présente invention, la zone de flashage est inexistante car si la proposition de changement de vitesse de consigne est produite pendant l'intervalle de temps TF, cette proposition est affichée selon un mode d'affichage également utilisé pour afficher une proposition qui serait produite par la fonction ISA activée à partir du passage du véhicule devant le panneau indicateur.

A cet effet, la présente invention concerne un procédé de régulation de vitesse d'un véhicule comprenant une validation d'une proposition de changement de vitesse de consigne passant d'une vitesse de consigne courante à une nouvelle vitesse de consigne différente de la vitesse de consigne courante et un déclenchement d'une décélération ou d'une accélération du véhicule de la vitesse de consigne courante jusqu'à la nouvelle vitesse de consigne si la proposition de changement de vitesse de consigne est validée, caractérisé en ce que le procédé comprend en outre les étapes suivantes : vérification d'un ensemble d'au moins une condition relative à la dynamique du véhicule et/ou à l'environnement du véhicule; si l'ensemble d'au moins une condition est vérifié à un instant temporel, alors production de la proposition de changement de vitesse de consigne; détermination d'une position du véhicule par rapport à un panneau indicateur d'une nouvelle vitesse limite, la nouvelle vitesse de consigne étant au plus égale à la nouvelle vitesse limite ; si la position du véhicule indique que le véhicule est en amont du panneau indicateur et si l'instant temporel est à l'intérieur d'un intervalle de temps défini entre deux affichages successifs de propositions de changement de vitesse de consigne alors un premier signal est généré et émis à destination d'un moyen d'affichage pour que la proposition de changement de vitesse de consigne soit affichée selon un premier mode d'affichage, si la position du véhicule indique que le véhicule est en amont du panneau indicateur et si l'instant temporel est à l'extérieur de l'intervalle de temps alors un deuxième signal est généré et émis à destination du moyen d'affichage pour que la proposition de changement de vitesse de consigne soit affichée selon un deuxième mode d'affichage, le premier mode d'affichage étant utilisé pour afficher une proposition de changement de vitesse de consigne une fois que le véhicule a atteint et dépassé le panneau indicateur.

Selon une variante, l'ensemble d'au moins une condition comprend au moins une des conditions suivantes :
- une route sur laquelle circule le véhicule a une caractéristique attendue ;
- un changement de vitesse n'est pas en cours ; et/ou
- la vitesse du véhicule n'a pas été modifiée depuis une durée déterminée.

Selon une variante, la nouvelle vitesse limite est obtenue à partir d'une détection d'un panneau indicateur de limitation de vitesse.

Selon une variante, la nouvelle vitesse limite est obtenue à partir d'une information cartographique.

Selon une variante, la position du véhicule par rapport au panneau indicateur est déterminée à partir de positions géographiques du véhicule et du panneau indicateur.

Selon une variante, la position du véhicule par rapport au panneau indicateur est déterminée à partir d'un capteur embarqué du véhicule.

Selon un deuxième aspect, la présente invention concerne un dispositif de régulation de vitesse d'un véhicule, le dispositif comprenant une mémoire associée à un processeur configuré pour la mise en œuvre des étapes du procédé selon le premier aspect de la présente invention.

Selon un troisième aspect, la présente invention concerne un véhicule, par exemple de type automobile, comprenant un dispositif tel que décrit ci-dessus selon le deuxième aspect de la présente invention.

Selon un quatrième aspect, la présente invention concerne un programme d'ordinateur qui comporte des instructions adaptées pour l'exécution des étapes du procédé selon le premier aspect de la présente invention, ceci notamment lorsque le programme d'ordinateur est exécuté par au moins un processeur.

Un tel programme d'ordinateur peut utiliser n'importe quel langage de programmation, et être sous la forme d'un code source, d'un code objet, ou d'un code intermédiaire entre un code source et un code objet, tel que dans une forme partiellement compilée, ou dans n'importe quelle autre forme souhaitable.

Selon un cinquième aspect, la présente invention concerne un support d'enregistrement lisible par un ordinateur sur lequel est enregistré un programme d'ordinateur comprenant des instructions pour l'exécution des étapes du procédé selon le premier aspect de la présente invention.

D'une part, le support d'enregistrement peut être n'importe quel entité ou dispositif capable de stocker le programme. Par exemple, le support peut comporter un moyen de stockage, tel qu'une mémoire ROM, un CD-ROM ou une mémoire ROM de type circuit microélectronique, ou encore un moyen d'enregistrement magnétique ou un disque dur.

D'autre part, ce support d'enregistrement peut également être un support transmissible tel qu'un signal électrique ou optique, un tel signal pouvant être acheminé via un câble électrique ou optique, par radio classique ou hertzienne ou par faisceau laser autodirigé ou par d'autres moyens. Le programme d'ordinateur selon la présente invention peut être en particulier téléchargé sur un réseau de type Internet.

Alternativement, le support d'enregistrement peut être un circuit intégré dans lequel le programme d'ordinateur est incorporé, le circuit intégré étant adapté pour exécuter ou pour être utilisé dans l'exécution du procédé en question.

### Brève description des figures

D'autres caractéristiques et avantages de la présente invention ressortiront de la description des exemples de réalisation particuliers et non limitatifs de la présente invention ci-après, en référence aux figures 1 à 9 annexées, sur lesquelles :
[Fig. 1] illustre un diagramme temporel représentant le fonctionnement d'une fonction AISA selon l'état de l'art ;
[Fig. 2] illustre au sein d'un diagramme des exemples de profils de décélération de vitesse en fonction de la distance du véhicule par rapport à un panneau indicateur d'une nouvelle vitesse de consigne, de la vitesse véhicule et de l'instant temporel où un conducteur valide une proposition de changement de vitesse de consigne ;
[Fig. 3] illustre une zone de flashage entre deux zones d'activation des fonctions AISA et ISA selon l'état de l'art ;
[Fig. 4] illustre schématiquement un véhicule selon un exemple de réalisation particulier et non limitatif de la présente invention ;
[Fig. 5] illustre schématiquement un dispositif configuré pour réguler la vitesse d'un véhicule, selon un exemple de réalisation particulier et non limitatif de la présente invention ;
[Fig. 6] illustre une situation de production d'une proposition de changement de vitesse de consigne par une fonction AISA selon un exemple de réalisation non limitatif de la présente invention ;
[Fig. 7] illustre une situation de production d'une proposition de changement de vitesse de consigne par une fonction AISA selon un exemple de réalisation non limitatif de la présente invention ;
[Fig. 8] illustre une situation de production d'une proposition de changement de vitesse de consigne par une fonction ISA selon un exemple de réalisation non limitatif de la présente invention ; et
[Fig. 9] illustre un organigramme des différentes étapes d'un procédé de régulation de la vitesse d'un véhicule, selon un exemple de réalisation particulier et non limitatif de la présente invention.

### Description des exemples de réalisation

Un procédé et un dispositif de régulation de la vitesse d'un véhicule vont maintenant être décrits dans ce qui va suivre en référence conjointement aux figures 1 à 9. Des mêmes éléments sont identifiés avec des mêmes signes de référence tout au long de la description qui va suivre.

La figure 4 illustre schématiquement un véhicule V selon un exemple de réalisation particulier et non limitatif de la présente invention.

La présente invention a notamment pour but de proposer un procédé et un dispositif de régulation de vitesse DR destiné à permettre une régulation de vitesse du véhicule V en présence de limitations de vitesse variables.

Dans ce qui suit, on considère, à titre d'exemple non limitatif, que le véhicule V est de type automobile. Il s'agit par exemple d'une voiture. Mais la présente invention n'est pas limitée à ce type de véhicule. Elle concerne en effet tout type de véhicule terrestre pouvant circuler sur des voies de circulation faisant l'objet de limitations de vitesses variables. Ainsi, elle concerne également et non limitativement les véhicules utilitaires, les motocyclettes, les cars, et les camions. Par ailleurs, on considère dans ce qui suit, à titre d'exemple non limitatif, que le véhicule V comprend un groupe motopropulseur (ou GMP) GM de type conventionnel, c'est-à-dire ne comportant comme source de couple qu'un moteur thermique. Mais ce véhicule pourrait comprendre un groupe motopropulseur de type hybride, c'est-à-dire comportant au moins un moteur thermique et au moins une machine auxiliaire capable de fournir du couple à partir de l'énergie stockée dans des moyens de stockage d'énergie (comme par exemple un moteur électrique ou à air comprimé), ou de type tout électrique, c'est-à-dire comportant au moins un moteur électrique.

On a schématiquement représenté sur la figure 4 le véhicule V comprenant le groupe motopropulseur GM (couplé au moins à une pédale d'accélérateur et à une pédale de frein), un calculateur de supervision CS propre à superviser le fonctionnement du groupe motopropulseur GM, et le dispositif de régulation de vitesse DR selon la présente invention.

Par exemple, le véhicule V peut comprendre un réseau de communication embarqué, éventuellement de type multiplexé, et permettant à des équipements électroniques embarqués (et notamment le calculateur de supervision CS et l'ordinateur de bord), qui sont connectés à lui, d'échanger des informations et instructions. Ainsi, le calculateur de supervision CS peut contrôler le groupe motopropulseur GM en lui transmettant des instructions via le réseau de communication embarqué.

Le dispositif de régulation de vitesse DR est chargé de contrôler la régulation de vitesse du véhicule V au moyen de vitesse de consigne sélectionnées par le conducteur CD ou bien qu'il a déterminées, éventuellement en fonction d'instructions fournies par le conducteur CD.

Dans l'exemple non limitatif illustré sur la figure 4, le dispositif de régulation de vitesse DR fait partie du calculateur de supervision CS. Mais cela n'est pas obligatoire. Ce dispositif de régulation de vitesse DR pourrait en effet être un équipement indépendant, éventuellement couplé au calculateur de supervision CS.

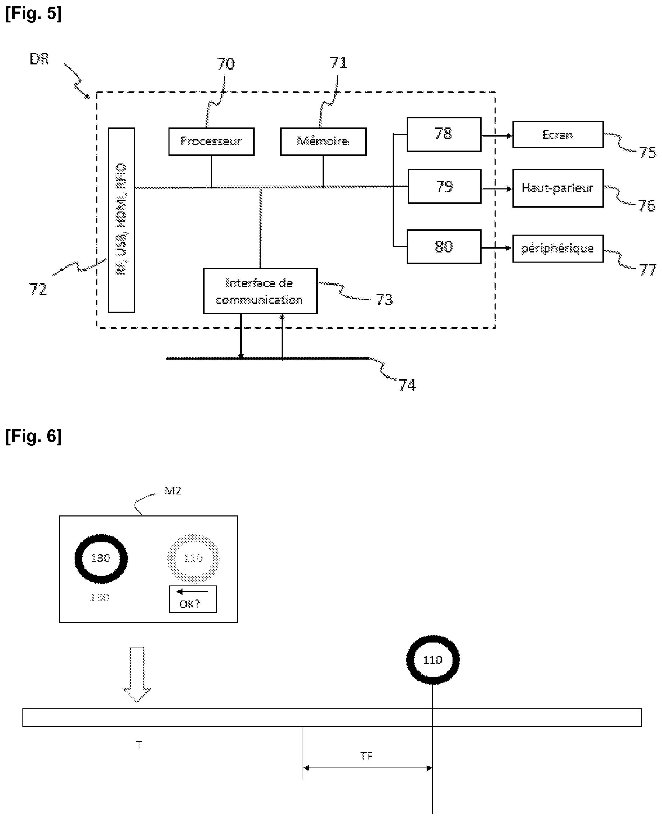

La figure 5 illustre schématiquement un dispositif de régulation DR indépendant selon un exemple de réalisation particulier et non limitatif de la présente invention.

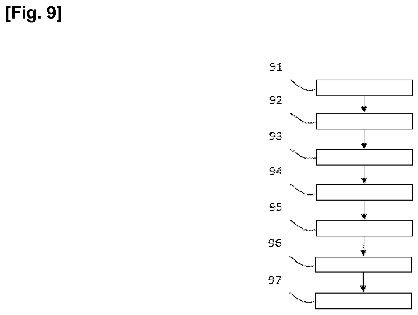

Le dispositif DR est par exemple configuré pour la mise en œuvre des opérations décrites en regard des figures 6, 7 et 8 et/ou des étapes du procédé décrit en regard de la figure 9. Des exemples d'un tel dispositif DR comprennent, sans y être limités, un équipement électronique embarqué tel qu'un ordinateur de bord d'un véhicule, un calculateur électronique tel qu'une UCE (« Unité de Commande Electronique »), un téléphone intelligent, une tablette, un ordinateur portable. Les éléments du dispositif DR, individuellement ou en combinaison, peuvent être intégrés dans un unique circuit intégré, dans plusieurs circuits intégrés, et/ou dans des composants discrets. Le dispositif DR peut être réalisé sous la forme de circuits électroniques ou de modules logiciels (ou informatiques) ou encore d'une combinaison de circuits électroniques et de modules logiciels.

Le dispositif DR comprend un (ou plusieurs) processeur(s) 70 configurés pour exécuter des instructions pour la réalisation des étapes du procédé et/ou pour l'exécution des instructions du ou des logiciels embarqués dans le dispositif DR. Le processeur 70 peut inclure de la mémoire intégrée, une interface d'entrée/sortie, et différents circuits connus de l'homme du métier. Le dispositif DR comprend en outre au moins une mémoire 71 correspondant par exemple à une mémoire volatile et/ou non volatile et/ou comprend un dispositif de stockage mémoire qui peut comprendre de la mémoire volatile et/ou non volatile, telle que EEPROM, ROM, PROM, RAM, DRAM, SRAM, flash, disque magnétique ou optique.

Le code informatique du ou des logiciels embarqués comprenant les instructions à charger et exécuter par le processeur est par exemple stocké sur la mémoire 71.

Selon différents exemples de réalisation particuliers et non limitatifs, le dispositif DR est couplé en communication avec d'autres dispositifs ou systèmes similaires et/ou avec des dispositifs de communication, par exemple une TCU (de l'anglais « Telematic Control Unit » ou en français « Unité de Contrôle Télématique »), par exemple par l'intermédiaire d'un bus de communication ou au travers de ports d'entrée / sortie dédiés.

Selon un exemple de réalisation particulier et non limitatif, le dispositif DR comprend un bloc 72 d'éléments d'interface pour communiquer avec des dispositifs externes, par exemple un serveur distant ou le « cloud », d'autres nœuds du réseau ad hoc. Les éléments d'interface du bloc 72 comprennent une ou plusieurs des interfaces suivantes :
- interface radiofréquence RF, par exemple de type Wi-Fi^{®} (selon IEEE 802.11), par exemple dans les bandes de fréquence à 2,4 ou 5 GHz, ou de type Bluetooth^{®} (selon IEEE 802.15.1), dans la bande de fréquence à 2,4 GHz, ou de type Sigfox utilisant une technologie radio UBN (de l'anglais Ultra Narrow Band, en français bande ultra étroite), ou LoRa dans la bande de fréquence 868 MHz, LTE (de l'anglais « Long-Term Evolution » ou en français « Evolution à long terme »), LTE-Advanced (ou en français LTE-avancé) ;
- interface USB (de l'anglais « Universal Serial Bus » ou « Bus Universel en Série » en français) ;
- interface HDMI (de l'anglais « High Definition Multimedia Interface », ou « Interface Multimedia Haute Definition » en français) ;
- interface LIN (de l'anglais « Local Interconnect Network », ou en français « Réseau interconnecté local »).

Des données sont par exemples chargées vers le dispositif DR via l'interface du bloc 72 en utilisant un réseau Wi-Fi^{®} tel que selon IEEE 802.11, un réseau ITS G5 basé sur IEEE 802.11p ou un réseau mobile tel qu'un réseau 4G (ou 5G) basé sur la norme LTE (de l'anglais Long Term Evolution) définie par le consortium 3GPP notamment un réseau LTE-V2X.

Selon un autre exemple de réalisation particulier et non limitatif, le dispositif DR comprend une interface de communication 73 qui permet d'établir une communication avec d'autres dispositifs (tels que d'autres calculateurs du système embarqué et notamment le calculateur de supervision CS) via un canal de communication 74. L'interface de communication 73 correspond par exemple à un transmetteur configuré pour transmettre et recevoir des informations et/ou des données via le canal de communication 74. L'interface de communication 73 correspond par exemple à un réseau filaire de type CAN (de l'anglais « Controller Area Network » ou en français « Réseau de contrôleurs »), CAN FD (de l'anglais « Controller Area Network Flexible Data-Rate » ou en français « Réseau de contrôleurs à débit de données flexible »), FlexRay (standardisé par la norme ISO 17458) ou Ethernet (standardisé par la norme ISO/IEC 802-3).

Selon un exemple de réalisation particulier et non limitatif, le dispositif DR peut fournir des signaux de sortie à un ou plusieurs dispositifs externes, tels qu'un écran d'affichage 75, tactile ou non, un ou des haut-parleurs 76 et/ou d'autres périphériques 77 tel qu'un dispositif d'affichage tête haute via respectivement des interfaces de sortie 78, 79 et 80.

Selon une variante, l'un ou l'autre des dispositifs externes est intégré au dispositif DR.

Le dispositif de régulation de vitesse DR est activé par le conducteur CD du véhicule V au moyen d'un organe de commande, éventuellement dédié, ou d'une commande vocale dédiée, ou encore d'une sélection d'une option dans un menu affiché sur un écran du véhicule V (par exemple celui du combiné central installé dans la planche de bord du véhicule). L'organe de commande peut, par exemple, être une manette (ou un commodo), éventuellement dédié.

Lorsque le dispositif de régulation DR est activé, dans une première opération, le dispositif de régulation DR obtient une nouvelle vitesse limite.

Selon une variante, une nouvelle vitesse limite peut être obtenue à partir de la détection d'un panneau indicateur de limitation de vitesse. Cette détection peut, par exemple, être mise en œuvre par un capteur situé à l'avant du véhicule V. Ce capteur peut aussi fournir une position PV du véhicule par rapport au véhicule V.

Selon une variante, une nouvelle vitesse limite peut être obtenue à partir d'une information cartographique qui indique la position géographique d'un panneau indicateur de cette nouvelle vitesse limite.

Selon une variante, cette information cartographique peut être obtenue à partir de la mémoire 71 du dispositif de régulation DR ou d'une base de données cartographiques stockées dans la mémoire 71. L'information cartographique est définie en fonction de la position géographique du véhicule V.

Selon une variante, cette information cartographique peut aussi être obtenue à partir d'un réseau de communication.

Dans une deuxième opération, le dispositif de régulation DR vérifie si un ensemble E d'au moins une condition relative à la dynamique du véhicule et/ou à l'environnement du véhicule est vérifié.

Selon une variante, une condition relative à l'environnement du véhicule est relative à la route sur laquelle circule le véhicule. Cette condition est vérifiée, par exemple, si la route est éligible ou si la route est une route particulière telle qu'une autoroute.

Selon une variante, une condition relative à la dynamique du véhicule est relative à une modification de vitesse du véhicule.

Par exemple cette condition est vérifiée si un changement de vitesse n'est pas en cours ou encore si la vitesse du véhicule V n'a pas été modifiée depuis une durée déterminée.

Dans une troisième opération, si l'ensemble E de conditions est vérifié à un instant temporel T, alors le dispositif de régulation DR produit une proposition de changement de vitesse de consigne passant d'une vitesse de consigne courante du véhicule V à une nouvelle vitesse de consigne différente de la vitesse de consigne courante.

La nouvelle vitesse de consigne est au plus égale à la nouvelle vitesse limite obtenue. Typiquement, la nouvelle vitesse de consigne est égale à la nouvelle vitesse limite.

Dans une quatrième opération, le dispositif de régulation DR détermine la position PV du véhicule V par rapport à une position d'un panneau indicateur de la nouvelle vitesse limite.

Selon une variante, la position du véhicule est donnée par un système GPS (de l'anglais, Global Positioning System, en français système de positionnement satellitaire) et la position du panneau indicateur est donnée par une information cartographique. La position PV du véhicule par rapport au panneau indicateur est alors obtenue à partir des positions géographiques du véhicule V et du panneau indicateur.

Selon une variante, un capteur embarqué du véhicule V donne la position PV du véhicule V par rapport à la position du panneau indicateur de la nouvelle vitesse limite.

Dans une cinquième opération, si la position PV du véhicule V indique que le véhicule V est en amont du panneau indicateur et si l'instant temporel T est à l'intérieur d'un intervalle de temps TF défini entre deux affichages successifs de propositions de changement de vitesse de consigne alors un premier signal est généré et émis (95) à destination d'un moyen d'affichage 75 ou 80 pour que la proposition de changement de vitesse de consigne soit affichée selon le premier mode d'affichageM1, ; si la position du véhicule indique que le véhicule est en amont du panneau indicateur et si l'instant temporel T est à l'extérieur de l'intervalle de temps TF alors un deuxième signal est généré et émis (95) à destination du moyen d'affichage 75 ou 80 pour que la proposition de changement de vitesse de consigne soit affichée selon le deuxième mode d'affichage M2.

Pour rappel, le premier mode d'affichage M1 est utilisé pour afficher une proposition de changement de vitesse de consigne une fois que le véhicule a atteint et dépassé le panneau indicateur (fonction ISA).

Dans une sixième opération, la proposition affichée est validée automatiquement ou par le conducteur CD.

Selon une variante, cette validation peut être effectuée au moyen d'un organe de commande, éventuellement dédié, ou d'une commande vocale dédiée, ou encore d'une sélection d'une option dans un menu affiché sur un écran du véhicule V.

Dans une septième opération, le dispositif de régulation DR déclenche une décélération ou une accélération du véhicule V pour que sa vitesse passe de la vitesse de consigne courante jusqu'à la nouvelle vitesse de consigne.

Les figures 6, 7 et 8 illustrent des situations de production de proposition de changement de vitesse de consigne par une fonction AISA ou ISA selon un exemple de réalisation non limitatif de la présente invention.

Selon ces exemples, la vitesse du véhicule V est régulée selon une vitesse de consigne courante de 130 km/h. Le dispositif de régulation DR obtient une nouvelle vitesse limite égale à 110 km/h et la fonction AISA est activée permettant ainsi la production d'un changement de vitesse de consigne. Admettons qu'à un instant temporel T, l'ensemble E de conditions est vérifié. Le dispositif de régulation DR produit alors une proposition de changement de vitesse de consigne passant de la vitesse de consigne courante de 130 km/h à une nouvelle vitesse de consigne égale à la nouvelle vitesse limite de 110 km/h. Le dispositif de régulation DR détermine alors la position PV du véhicule V par rapport à une position d'un panneau indicateur de la nouvelle vitesse limite.

Selon l'exemple de la figure 6, l'instant temporel T est à l'extérieur de l'intervalle de temps TF et la position PV indique que le véhicule V est en amont du panneau indicateur. Le dispositif de régulation DR génère alors un deuxième signal qu'il émet à destination d'un moyen d'affichage 75 ou 80 pour que la proposition de changement de vitesse de consigne soit affichée selon le deuxième mode d'affichage M2.

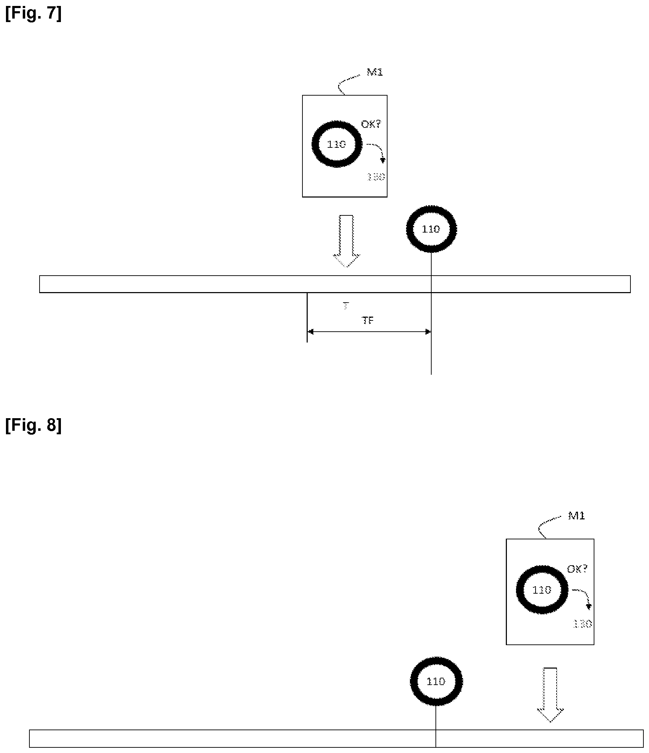

Selon l'exemple de la figure 7, l'instant temporel T est à l'intérieur de l'intervalle de temps TF et la position PV indique que le véhicule V est en amont du panneau indicateur. Le dispositif de régulation DR génère alors un premier signal qu'il émet à destination d'un moyen d'affichage 75 ou 80 pour que la proposition de changement de vitesse de consigne soit affichée selon le premier mode d'affichage M1.

Selon l'exemple de la figure 8, la position PV indique que le véhicule V est en aval du panneau indicateur. Le dispositif de régulation DR génère alors un premier signal qu'il émet à destination d'un moyen d'affichage 75 ou 80 pour que la proposition de changement de vitesse de consigne soit affichée selon le premier mode d'affichage M1.

La figure 9 illustre un organigramme des différentes étapes d'un procédé de régulation de vitesse d'un véhicule, selon un exemple de réalisation particulier et non limitatif de la présente invention. Le procédé est par exemple mis en œuvre par un dispositif embarqué dans le véhicule V ou par le dispositif DR de la figure 5.

Dans une première étape 91, une nouvelle vitesse limite est obtenue.

Dans une deuxième étape 92, un ensemble E d'au moins une condition relative à la dynamique du véhicule et/ou à l'environnement du véhicule est vérifié.

Dans une troisième étape 93, si l'ensemble E de conditions est vérifié à un instant temporel T alors une proposition de changement de vitesse de consigne passant d'une vitesse de consigne courante du véhicule à une nouvelle vitesse de consigne différente de la vitesse de consigne courante, est produite, il y a alors production de la proposition de changement de vitesse de consigne. Le dispositif a alors créé la proposition de changement de vitesse de consigne.

Dans une quatrième étape 94, la position du véhicule par rapport à une position d'un panneau indicateur de la nouvelle vitesse limite est déterminée.

Dans une cinquième étape 95, si la position du véhicule indique que le véhicule est en amont du panneau indicateur et si l'instant temporel T est à l'intérieur d'un intervalle de temps TF défini entre deux affichages successifs de propositions de changement de vitesse de consigne alors un premier signal est généré et émis à destination d'un moyen d'affichage pour que la proposition de changement de vitesse de consigne soit affichée selon un premier mode d'affichage, si la position du véhicule indique que le véhicule est en amont du panneau indicateur et si l'instant temporel T est à l'extérieur de l'intervalle de temps TF alors un deuxième signal est généré et émis à destination du moyen d'affichage pour que la proposition de changement de vitesse de consigne soit affichée selon un deuxième mode d'affichage, le premier mode d'affichage étant utilisé pour afficher une proposition de changement de vitesse de consigne une fois que le véhicule a atteint et dépassé le panneau indicateur.

Dans une sixième étape 96, la proposition de changement de vitesse de consigne affichée est validée automatiquement ou par un conducteur du véhicule.

Dans une septième étape 97, une accélération ou une décélération du véhicule est déclenchée de la vitesse de consigne courante jusqu'à la nouvelle vitesse de consigne.

Selon une variante, les variantes et exemples des opérations décrits en relation avec les figures 4 à 8 s'appliquent aux étapes du procédé de la figure 9.

Le procédé de régulation de vitesse d'un véhicule peut inclure des étapes secondaires . Il en est de même du dispositif configuré pour la mise en œuvre du procédé.

La présente invention concerne également un véhicule, par exemple automobile ou plus généralement un véhicule autonome à moteur terrestre, comprenant le dispositif DR de la figure 5.

## Revendications

1. Procédé de régulation de vitesse d'un véhicule comprenant une validation (96) d'une proposition de changement de vitesse de consigne passant d'une vitesse de consigne courante à une nouvelle vitesse de consigne différente de la vitesse de consigne courante et un déclenchement (97) d'une décélération ou d'une accélération du véhicule de la vitesse de consigne courante jusqu'à la nouvelle vitesse de consigne si la proposition de changement de vitesse de consigne est validée, **caractérisé en ce que** le procédé comprend en outre les étapes suivantes : vérification (92) d'un ensemble d'au moins une condition relative à la dynamique du véhicule et/ou à l'environnement du véhicule; production (93) de la proposition de changement de vitesse de consigne si l'ensemble d'au moins une condition est vérifié à un instant temporel; détermination (94) d'une position du véhicule par rapport à un panneau indicateur d'une nouvelle vitesse limite, la nouvelle vitesse de consigne étant au plus égale à la nouvelle vitesse limite ; si la position du véhicule indique que le véhicule est en amont du panneau indicateur et si l'instant temporel est à l'intérieur d'un intervalle de temps défini entre deux affichages successifs de propositions de changement de vitesse de consigne alors un premier signal est généré et émis (95) à destination d'un moyen d'affichage pour que la proposition de changement de vitesse de consigne soit affichée selon un premier mode d'affichage, si la position du véhicule indique que le véhicule est en amont du panneau indicateur et si l'instant temporel est à l'extérieur de l'intervalle de temps alors un deuxième signal est généré et émis (95) à destination du moyen d'affichage pour que la proposition de changement de vitesse de consigne soit affichée selon un deuxième mode d'affichage, le premier mode d'affichage étant utilisé pour afficher une proposition de changement de vitesse de consigne une fois que le véhicule a atteint et dépassé le panneau indicateur.

2. Procédé selon la revendication 1, dans lequel l'ensemble d'au moins une condition comprend au moins une des conditions suivantes :
- une route sur laquelle circule le véhicule a une caractéristique attendue ;
- un changement de vitesse n'est pas en cours ; et/ou
- la vitesse du véhicule n'a pas été modifiée depuis une durée déterminée.

3. Procédé selon la revendication 1 ou 2, dans laquelle la nouvelle vitesse limite est obtenue à partir d'une détection d'un panneau indicateur de limitation de vitesse.

4. Procédé selon la revendication 1 ou 2, dans lequel la nouvelle vitesse limite est obtenue à partir d'une information cartographique.

5. Procédé selon l'une des revendications 1 à 4, dans lequel la position du véhicule par rapport au panneau indicateur est déterminée à partir de positions géographiques du véhicule et du panneau indicateur.

6. Procédé selon l'une des revendications 1 à 4, dans lequel la position du véhicule par rapport au panneau indicateur est déterminée à partir d'un capteur embarqué du véhicule.

7. Programme d'ordinateur comportant des instructions mettant en œuvre le procédé selon l'une quelconque des revendications précédentes, lorsque ces instructions sont exécutées par un processeur.

8. Support d'enregistrement lisible par un ordinateur sur lequel est enregistré un programme d'ordinateur selon la revendication 7.

9. Dispositif (DR) de régulation de vitesse d'un véhicule, ledit dispositif (DR) comprenant une mémoire (71) associée à au moins un processeur (70) configuré pour la mise en œuvre des étapes du procédé selon l'une quelconque des revendications 1 à 6.

10. Véhicule (V) comprenant le dispositif (DR) selon la revendication 9.

## Patentansprüche

1. Ein Verfahren zur Regelung der Geschwindigkeit eines Fahrzeugs, umfassend die Validierung (96) einer vorgeschlagenen Änderung der Sollgeschwindigkeit von einer aktuellen Sollgeschwindigkeit auf eine neue Sollgeschwindigkeit, die sich von der aktuellen Sollgeschwindigkeit unterscheidet, und die Auslösung (97) einer Verzögerung oder Beschleunigung des Fahrzeugs von der aktuellen Sollgeschwindigkeit auf die neue Sollgeschwindigkeit, wenn die vorgeschlagene Änderung der Sollgeschwindigkeit validiert wird, **dadurch gekennzeichnet, dass** das Verfahren ferner die folgenden Schritte umfasst: Überprüfung (92) einer Menge von mindestens einer Bedingung in Bezug auf die Dynamik des Fahrzeugs und/oder die Umgebung des Fahrzeugs; Erzeugung (93) der vorgeschlagenen Änderung der Sollgeschwindigkeit, wenn die Menge von mindestens einer Bedingung zu einem Zeitpunkt erfüllt ist; Bestimmung (94) einer Position des Fahrzeugs relativ zu einem Schild, das eine neue Geschwindigkeitsbegrenzung anzeigt, wobei die neue Sollgeschwindigkeit höchstens gleich der neuen Geschwindigkeitsbegrenzung ist; Befindet sich das Fahrzeug vor dem Blinker und liegt der Zeitpunkt innerhalb eines definierten Zeitintervalls zwischen zwei aufeinanderfolgenden Anzeigen der vorgeschlagenen Geschwindigkeitsänderung, wird ein erstes Signal (95) erzeugt und an eine Anzeigeeinrichtung gesendet, sodass die vorgeschlagene Geschwindigkeitsänderung gemäß einem ersten Anzeigemodus angezeigt wird. Befindet sich das Fahrzeug vor dem Blinker und liegt der Zeitpunkt außerhalb des Zeitintervalls, wird ein zweites Signal (95) erzeugt und an die Anzeigeeinrichtung gesendet, sodass die vorgeschlagene Geschwindigkeitsänderung gemäß einem zweiten Anzeigemodus angezeigt wird. Der erste Anzeigemodus wird verwendet, um eine vorgeschlagene Geschwindigkeitsänderung anzuzeigen, sobald das Fahrzeug den Blinker erreicht und passiert hat.

2. Verfahren nach Anspruch 1, wobei die Menge mindestens einer Bedingung mindestens eine der folgenden Bedingungen umfasst:
- die Straße, auf der das Fahrzeug fährt, weist eine erwartete Eigenschaft auf; - es findet keine Geschwindigkeitsänderung statt; und/oder
- die Geschwindigkeit des Fahrzeugs wurde über einen bestimmten Zeitraum nicht geändert.

3. Verfahren nach Anspruch 1 oder 2, wobei die neue Geschwindigkeitsbegrenzung durch die Erkennung eines Geschwindigkeitsbegrenzungsschildes ermittelt wird.

4. Verfahren nach Anspruch 1 oder 2, wobei die neue Geschwindigkeitsbegrenzung aus Karteninformationen ermittelt wird.

5. Verfahren nach einem der Ansprüche 1 bis 4, wobei die Position des Fahrzeugs relativ zum Wegweiser aus den geografischen Positionen des Fahrzeugs und des Wegweisers bestimmt wird.

6. Verfahren nach einem der Ansprüche 1 bis 4, wobei die Position des Fahrzeugs relativ zum Blinkerschild mittels eines im Fahrzeug befindlichen Sensors ermittelt wird.

7. Computerprogramm mit Anweisungen, die das Verfahren gemäß einem der vorhergehenden Ansprüche implementieren, wenn diese Anweisungen von einem Prozessor ausgeführt werden.

8. Computerlesbares Aufzeichnungsmedium, auf dem ein Computerprogramm nach Anspruch 7 aufgezeichnet ist.

9. Geschwindigkeitsregelvorrichtung (DR) für Fahrzeuge, wobei die (DR) einen Speicher (71) umfasst, der mit mindestens einem Prozessor (70) verbunden ist, der für die Durchführung der Verfahrensschritte gemäß einem der Ansprüche 1 bis 6 konfiguriert ist.

10. Fahrzeug (V) umfassend die Vorrichtung (DR) nach Anspruch 9.

## Claims

1. A method for regulating the speed of a vehicle comprising validating (96) a proposed change in set speed from a current set speed to a new set speed different from the current set speed and triggering (97) a deceleration or acceleration of the vehicle from the current set speed to the new set speed if the proposed change in set speed is validated, **characterized in that** the method further comprises the following steps: checking (92) a set of at least one condition relating to the dynamics of the vehicle and/or the environment of the vehicle; producing (93) the proposed change in set speed if the set of at least one condition is met at a time instant; determining (94) a position of the vehicle relative to a sign indicating a new speed limit, the new set speed being at most equal to the new speed limit; If the vehicle's position indicates that the vehicle is upstream of the indicator sign and if the time instant is within a defined time interval between two successive displays of proposed set speed changes, then a first signal is generated and emitted (95) to a display means so that the proposed set speed change is displayed according to a first display mode ; if the vehicle's position indicates that the vehicle is upstream of the indicator sign and if the time instant is outside the time interval, then a second signal is generated and emitted (95) to the display means so that the proposed set speed change is displayed according to a second display mode, the first display mode being used to display a proposed set speed change once the vehicle has reached and passed the indicator sign.

2. A method according to claim 1, wherein the set of at least one condition includes at least one of the following conditions:
- a road on which the vehicle is traveling has an expected characteristic; - a change of speed is not in progress; and/or
- the speed of the vehicle has not been changed for a specified period.

3. A method according to claim 1 or 2, wherein the new speed limit is obtained from a detection of a speed limit sign.

4. A method according to claim 1 or 2, wherein the new speed limit is obtained from map information.

5. A method according to any one of claims 1 to 4, wherein the position of the vehicle relative to the signpost is determined from geographical positions of the vehicle and the signpost.

6. A method according to any one of claims 1 to 4, wherein the position of the vehicle relative to the indicator sign is determined from a sensor on board the vehicle.

7. Computer program comprising instructions implementing the method according to any one of the preceding claims, when such instructions are executed by a processor.

8. Computer-readable recording medium on which a computer program according to claim 7 is recorded.

9. Vehicle speed control device (DR), said device (DR) comprising a memory (71) associated with at least one processor (70) configured for the implementation of the steps of the method according to any one of claims 1 to 6.

10. Vehicle (V) comprising the device (DR) according to claim 9.
